# EUROPÄISCHE PATENTSCHRIFT

(11) **EP 1 944 506 B1**
(45) Veröffentlichungstag und Bekanntmachung des Hinweises auf die Patenterteilung: **19.10.2011**
(21) Anmeldenummer: 07020757.6
(22) Anmeldetag: 24.10.2007
(51) Int. Cl.: F03D 11/00, F03D 7/02

(54) **Windenergieanlage mit einer hydraulisch betätigten Rotorbremse und Verfahren zur hydraulischen Steuerung einer Rotorbremse**
Wind turbine having a hydraulically actuated rotor brake and the method for controlling the same
Éolienne avec un frein de rotor commandé hydrauliquement et procédé pour le contrôler

(30) Priorität: 10.01.2007 DE 102007002136
(43) Veröffentlichungstag der Anmeldung: 16.07.2008
(73) Patentinhaber: Nordex Energy GmbH, 22848 Norderstedt (DE)
(72) Erfinder: Wedekind, Christian, 22455 Hamburg (DE)
(74) Vertreter: Hauck Patent- und Rechtsanwälte

(56) Entgegenhaltungen:
- DE-A1-102004 057 739
- DE-U1- 20 212 459
- US-A- 4 142 368

## Beschreibung

Die vorliegende Erfindung betrifft eine Windenergieanlage mit einer hydraulisch betätigten Rotorbremse und ein Verfahren zur hydraulischen Steuerung einer Rotorbremse.

Windenergieanlagen verfügen über eine Rotorbremse im Triebstrang. Die Rotorbremse ist meist hinter dem Getriebe angeordnet und erfüllt bei Windenergieanlagen mit einer aktiven Blattwinkelverstellung die Aufgabe eines zusätzlichen Bremssystems, das den stillstehenden Rotor der Windenergieanlage in seiner Position hält.

Erich Hau erläutert in Windkraftanlagen, 3. Auflage, Springer-Verlag Berlin, Kapitel 8.7, daß für Wartungs- und Reparaturarbeiten das Festbremsen des Rotors unerläßlich und im allgemeinen auch während der normalen Stillstandszeiten üblich sei. Zu der Funktion der Rotorbremse bei der Betriebsführung wird ferner erläutert, daß diese im einfachsten Fall auf die reine Haltefunktion beim Rotorstillstand begrenzt sei. Die Bremse müsse in diesem Fall auf das erforderliche Haltemoment des Rotors im Stillstand ausgelegt sein. Über die Funktion als reine Haltebremse hinaus könne die Rotorbremse grundsätzlich auch als Betriebsbremse ausgelegt werden, sofern das Bremsmoment und die Bremsleistung (thermische Beanspruchung) ausreichend seien.

Bei Windenergieanlagen, bei denen die Rotorbremse Teil des Sicherheitssystems ist, ist das Bremssystem als passive Bremse oder als sogenannte FailSafe-Bremse ausgelegt. Dies bedeutet, daß die Bremse mit Druck beaufschlagt werden muß, um das anliegende Bremsmoment zu reduzieren oder die Bremse vollständig freizugeben. Erzielt wird das Bremsmoment der passiven Bremse über ein Federpaket, das die zugehörigen Bremsbacken in die Bremsposition vorspannt. Das dabei aufgebrachte Bremsmoment wird durch die von den Federelementen ausgeübte Federkraft erzeugt. Es ist daher notwendig, für eine Windenergieanlage, die ein starkes Bremsmoment erfordert, entsprechend große Federpakete in der Bremse vorzusehen. Die vorstehend beschriebene passive Rotorbremse wird gelöst, indem beispielsweise eine Hydraulikflüssigkeit in den Bremszylinder eingeleitet wird. Die Hydraulikflüssigkeit wird derart in den Bremszylinder eingeleitet, daß ihr Druck gegen die Kraft des Federpakets wirkt.

Im Gegensatz zu den vorstehend beschriebenen passiven Bremsen sind auch aktive Bremsen für Windenergieanlagen bekannt, bei denen das Bremsmoment nicht über ein Federelement aufgebracht wird, sondern mit steigendem Hydraulikdruck auch das Bremsmoment zunimmt. Der Vorteil einer aktiven Bremse liegt darin, daß diese kleiner baut und deutlich kostengünstiger ist. Auch ist mit einer aktiven Bremse ein deutlich größeres Bremsmoment möglich.

Aus DE 202 12 459 U1 ist ein elektrohydraulisches Bremsmodul für eine Windkraftanlage bekannt, das sowohl bei aktiven als auch bei passiven Bremsen eingesetzt werden kann. Das elektrohydraulische Bremsmodul erlaubt eine proportionale Bremssteuerung, die zumindest bei einem Netzausfall die Generator-Soll-Drehzahl hält. Um die Bremswirkung proportional zu modulieren, wird über ein Proportional-Druckbegrenzungs-Regelventil der Ablauf von Hydraulikflüssigkeit aus der Arbeitsleitung proportional gesteuert.

Der Erfindung liegt die Aufgabe zugrunde, ein Verfahren zur Steuerung einer hydraulisch betätigten Rotorbremse sowie eine Windenergieanlage mit einer hydraulisch betätigten Rotorbremse bereitzustellen, bei dem/der eine aktive Rotorbremse sowohl als Haltebremse als auch als Betriebsbremse ausgelegt ist.

Erfindungsgemäß wird die Aufgabe durch ein Verfahren gemäß Anspruch 1 und eine Windenergieanlage gemäß Anspruch 9 gelöst. Vorteilhafte Ausgestaltungen der Erfindung bilden die Gegenstände der Unteransprüche.

Die Erfindung betrifft ein Verfahren zur Steuerung einer hydraulisch betätigten Rotorbremse für den Triebstrang einer Windenergieanlage. Die Rotorbremse ist als aktive Rotorbremse ausgebildet, die mit steigendem Hydraulikdruck in einem Bremszylinder ein zunehmendes Bremsmoment aufbringt. Bei dem erfindungsgemäßen Verfahren wird in einer ersten Phase ein Bremszylinder über ein erstes Druckminderventil mit einem ersten Druck beaufschlagt. Die erste Phase des Bremsvorgangs kann als eine Phase angesehen werden, in der die Rotorbremse als Betriebsbremse unterstützend zu einem Pitchsystem eingreift. In einer zweiten Phase wird der Bremszylinder über ein zweites Druckminderventil mit einem zweiten Druck beaufschlagt. In der zweiten Phase kann die Rotorbremse beispielsweise als Haltebremse für den stillstehenden Rotor eingesetzt werden. Erfindungsgemäß ist für die aktive Bremse eine Umschalteinheit vorgesehen, die von dem ersten Druck auf den zweiten Druck umschaltet. Die Umschalteinrichtung an einer hydraulisch betätigten Bremse mit zwei separaten Druckminderventilen für unterschiedliche Drücke gestattet es, die hydraulisch betätigte Bremse als eine aktive Bremse in einer ersten und einer zweiten Phase des Bremsvorgangs einzusetzen.

In einer bevorzugten Ausgestaltung des erfindungsgemäßen Verfahrens ist ein Drucksystem vorgesehen, das ausfallsicher Hydraulikflüssigkeit zur Betätigung der Rotorbremse bereitstellt. Das Drucksystem ist in an sich bekannter Weise mit einer Pumpe und Hydrospeichern ausgestattet, um selbst bei einem Ausfall der Pumpe oder einem Ausfall der gesamten elektrischen Versorgung oder Steuerung der Windenergieanlage ausreichend viel Hydraulikflüssigkeit mit einem hinreichend großen Systemdruck zur Verfügung zu stellen, damit ein oder mehrere Bremsvorgänge zuverlässig durchgeführt werden können.

Das Hydrauliksystem kann dabei so ausgelegt sein, daß weitere Verbraucher, wie beispielsweise eine Pitch-Anlage, ebenfalls von dem Hydrauliksystem ausfallsicher versorgt werden können.

In einer bevorzugten Weiterführung des erfindungsgemäßen Verfahrens schaltet die Umschalteinheit nach Stillstand des Triebstrangs um. Zweckmäßigerweise ist der Druck, der über das erste Druckminderventil an dem Bremszylinder anliegt, kleiner als der Druck, der über das zweite Druckminderventil anliegt. Die beiden Drücke der Druckminderventile erzeugen entsprechende Bremsmomente über den Bremszylinder.

Bevorzugt stellt der Druck des zweiten Druckminderventils mindestens ein vorbestimmtes Haltemoment an der Rotorbremse ein. Das vorbestimmte Haltemoment stellt sich bevorzugt bei Umgebungstemperatur für die Rotorbremse ein. Hierbei ist zu berücksichtigen, daß nach Verwendung der Rotorbremse als unterstützende Betriebsbremse diese eine erhöhte Temperatur besitzt und damit ein deutlich größeres Bremsmoment aufgrund der Temperaturabhängigkeit des Reibwertes für die Paarung Bremsbelag und Scheibe erzeugt. Mit Abkühlen der Rotorbremse vermindert sich dann das anliegende Bremsmoment. Beim Einstellen des zweiten Druckminderventils ist daher zu beachten, daß nach Abkühlen der Rotorbremse auf die Umgebungstemperatur das vorbestimmte Haltemoment erzeugt wird.

Um bei der hydraulischen Betätigung der Rotorbremse sicherzustellen, daß bei einer Störung im System ein ausreichender Druck in den Druckleitungen zu dem Bremszylinder vorhanden ist, ist bevorzugt stromaufwärts von jedem Druckminderventil in der Druckleitung ein 2/2-Wegeventil vorgeschaltet, das in seine offene Stellung federvorgespannt ist.

Fällt die Versorgungsspannung für die 2/2-Wegeventile aus, so leiten sie den Systemdruck an die Druckminderventile, die den Systemdruck heruntersetzen und an den Bremszylinder weiterleiten.

In einer bevorzugten Ausführung des erfindungsgemäßen Verfahrens löst die Umschalteinrichtung nach einer vorbestimmten Zeitdauer das Umschalten aus. Die vorbestimmte Zeitdauer ist dabei so gewählt, daß sie größer ist als die Zeitdauer, die erforderlich ist, um den Rotor bis zum Stillstand abzubremsen.

In einer bevorzugten Ausgestaltung wird die Umschalteinheit hydraulisch betätigt. Alternativ ist es auch möglich, die Umschalteinheit elektrisch zu betätigen.

Die erfindungsgemäße Aufgabe wird ebenfalls durch eine Windenergieanlage mit den Merkmalen aus Anspruch 9 gelöst.

Die erfindungsgemäße Windenergieanlage besitzt eine hydraulisch betätigte Rotorbremse für den Triebstrang, die als aktive Rotorbremse ausgebildet ist. Die aktive Rotorbremse bringt mit steigendem Hydraulikdruck ein zunehmendes Bremsmoment auf. Die Windenergieanlage besitzt eine erste und eine zweite Bremseinheit, die jeweils ein Druckminderventil aufweisen, über das ein Bremszylinder mit einem Druck beaufschlagt wird. Ferner ist für die erfindungsgemäße Windenergieanlage eine Umschalteinrichtung vorgesehen, die von dem Druck der ersten Bremseinheit auf den Druck der zweiten Bremseinheit umschaltet. Die aktive Rotorbremse ist damit geeignet, als unterstützende Betriebsbremse eingesetzt zu werden und ebenfalls als Haltebremse zu dienen.

Bevorzugt ist die erfindungsgemäße Windenergieanlage mit einem ausfallsicheren Drucksystem versehen, das Hydraulikflüssigkeit zur Betätigung der Rotorbremse bereitstellt. Ein solches ausfallsicheres Drucksystem besitzt einen ausreichend dimensionierten Hydrospeicher, um auch bei einem Stromausfall bzw. einem Pumpenausfall Hydraulikflüssigkeit in ausreichender Menge und mit ausreichendem Systemdruck zur Betätigung der Rotorbremse bereitzustellen. Bei der erfindungsgemäßen Windenergieanlage wird nach Stillstand des Triebstrangs umgeschaltet. Mit dem Umschalten wird von dem Druck der ersten Bremseinheit auf den Druck der zweiten Bremseinheit gewechselt, wobei der Druck der ersten Bremseinheit kleiner als der Druck der zweiten Bremseinheit ist. Hierzu ist in der ersten Bremseinheit ein erstes Druckminderventil vorgesehen, das einen anliegenden Systemdruck stärker reduziert als ein Druckminderventil in der zweiten Bremseinheit.

Das Druckminderventil der zweiten Bremseinheit ist bevorzugt derart ausgelegt, daß ein Bremsmoment an dem Bremszylinder erzeugt wird, das mindestens einem vorbestimmten Haltemoment entspricht. Da mit einer Abkühlung der Rotorbremse das Bremsmoment aufgrund des Reibwertes abnimmt, ist das vorbestimmte Haltemoment so ausgelegt, daß bei Umgebungstemperatur mindestens das für den Rotor erforderliche Haltemoment anliegt.

In einer bevorzugten Ausgestaltung ist jedem Druckminderventil ein 2/2-Wegeventil vorgeschaltet, das in eine die Eingangs- und Ausgangsleitung verbindende Position vorgespannt ist. Die vorgespannten 2/2-Wegeventile stellen sicher, daß bei einem Ausfall bei der Ansteuerung die Druckleitung frei ist und so ein ausreichender Systemdruck zur Betätigung des Bremszylinders vorhanden ist.

In einer bevorzugten Ausgestaltung ist die Umschalteinheit hydraulisch ausgebildet und betätigt hydraulisch das 2/2-Wegeventil der zweiten Bremseinheit. Alternativ ist es auch möglich, daß die Umschalteinheit elektrisch das 2/2-Wegeventil der zweiten Bremseinheit betätigt.

Um die Bremse wieder zu lösen, ist ein 2/2-Wegeventil in einer Druckleitung zum Bremszylinder vorgesehen, das in seiner durchgehenden Stellung die Zuleitungen mit dem Tank verbindet, wobei das 2/2-Wegeventil in seine sperrende Stellung vorgespannt ist.

Die Erfindung wird nachfolgend anhand von einem Ausführungsbeispiel näher erläutert.

Es zeigt:
- Fig. 1: den zeitlichen Verlauf der Momente bei einer aktiven, hydraulisch betätigten Rotorbremse gemäß der vorliegenden Erfindung und
- Fig. 2: den Aufbau der Hydraulik für eine Rotorbremse.

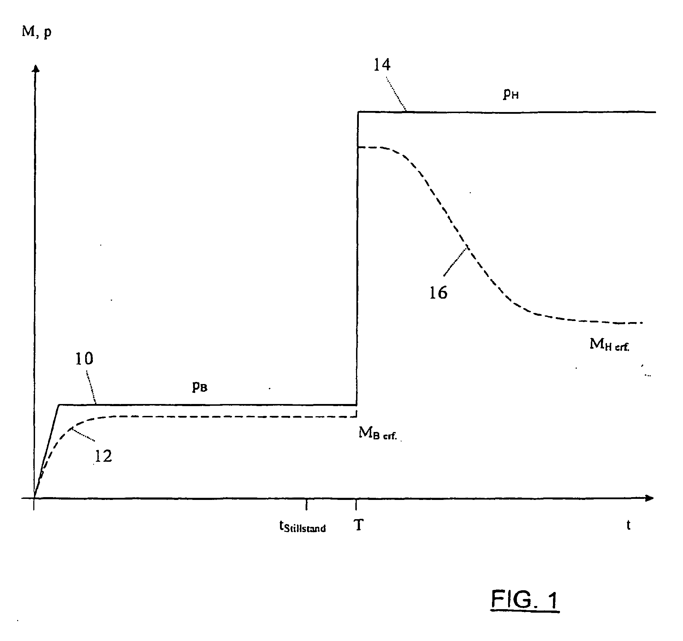

Fig. 1 zeigt den Verlauf von Druck p und Bremsmoment M über der Zeit. Bei der erfindungsgemäßen Rotorbremse wird in einer ersten Phase ein Bremsdruck 10 an den Bremszylinder angelegt. Der Bremsdruck führt zu dem ansteigenden Bremsmoment 12, mit dem die Bremse greift und den Triebstrang bremst. Die Betriebsbremse mit dem Bremsdruck 10 wird bis zu einer vorbestimmten Zeit T fortgesetzt. Die Zeit T ist dabei größer als die erwartete Stillstandszeit t_{Stillstand}. Bis zum Zeitpunkt t_{Stillstand} wird der Rotor der Windenergieanlage durch Einsatz seines Pitch-Systems und das anliegende Bremsmoment 12 zum Stillstand gebracht.

Zum Zeitpunkt T wird in der Hydraulik umgeschaltet und es liegt von da an der Haltedruck 14 an dem Bremszylinder an. Da die Bremse sich während der ersten Phase erwärmt hat, führt der Haltedruck 14 zu einem Bremsmoment 16, das mit der Abkühlung der Rotorbremse nachfolgend abfällt und für die abgekühlte Rotorbremse das erforderliche Haltemoment für die Bremse erreicht oder übersteigt. Der Haltedruck 14 liegt dabei konstant an dem Bremszylinder an.

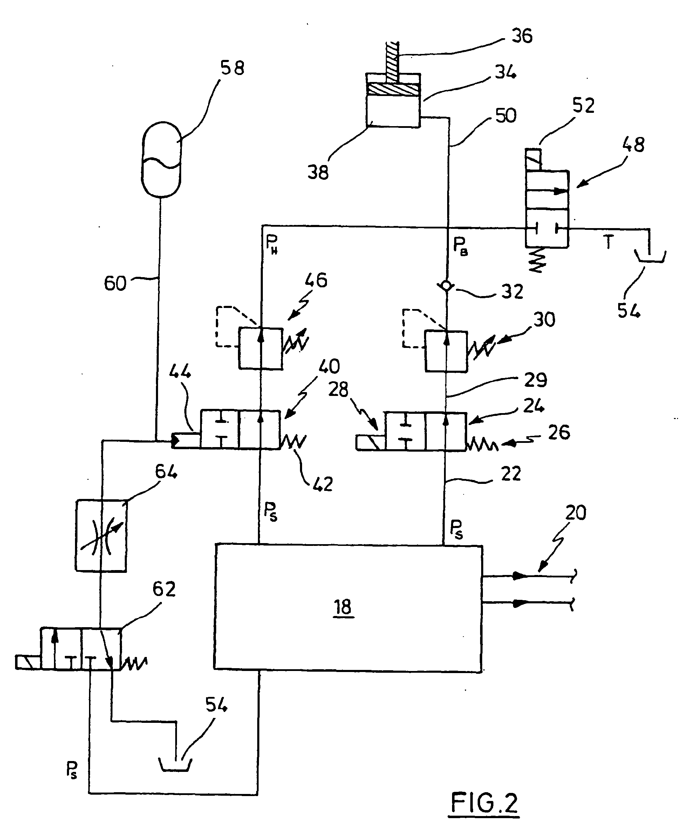

Fig. 2 zeigt beispielhaft den Aufbau der hydraulischen Betätigung für die Rotorbremse. Hierzu ist ein Drucksystem 18 vorgesehen, das mit einer Pumpe und Speichern ausgestattet ist, um eine Hydraulikflüssigkeit mit ausreichendem Druck abzugeben. Rückführende Leitungen oder Steuerleitungen sind zur besseren Übersicht in Fig. 2 nicht dargestellt. Das Drucksystem 18 kann auch zusätzliche Druckleitungen 20 besitzen, mit denen weitere Systeme der Windenergieanlage, wie beispielsweise der Pitchantrieb, betätigt werden können.

Eine erste Druckleitung 22 führt zu einem ersten 2/2-Wegeventil 24. Das 2/2-Wegeventil 24 ist in seiner stromlosen Stellung gezeigt, in die es über eine Feder 26 vorgespannt ist. Über eine elektromagnetische Betätigung 28 wird das 2/2-Wegeventil 24 in seine gesperrte Stellung gebracht. In der gesperrten Stellung verbleibt der Druck in der Druckleitung. Die vom 2/2-Wegeventil 24 abgehende Druckleitung 29 liegt an einem Druckminderventil 30 an. Druckminderventile werden gelegentlich auch als Druckreduzierungsventile bezeichnet und sind als Schieberventile direkt gesteuert oder vorgesteuert ausgebildet.

Bei dem Druckminderventil 30 liegt an der Eingangsleitung der Systemdruck p_{S} an, der auf einer Fläche des Ventilelements eine Kraft erzeugt. Über eine sogenannte Druckwaage stellt sich am Ausgang des Druckminderventils 30 der gewünschte Bremsdruck p_{B} ein. Stromabwärts von dem Druckminderventil 30 ist ein Rückschlagventil 32 vorgesehen, das ein Zurückfließen von Hydraulikflüssigkeit über das Druckminderventil 30 verhindert. Der Bremsdruck p_{B} liegt über eine Druckleitung an einem Bremszylinder 34 an. Der Bremszylinder 34 besitzt einen beweglichen Kolben 36, der durch den Druck in der Zylinderkammer 38 eine Kraft auf die Bremsbeläge und deren Betätigung ausübt. 2/2-Wegeventil 24 und Druckminderventil 30 bilden gemeinsam die erste Bremseinheit für die erfindungsgemäße Rotorbremse, die als unterstützende Betriebsbremse eingesetzt werden kann.

Die zweite Bremseinheit besitzt ein zweites 2/2-Wegeventil 40, das über eine Feder 42 in seine offene Position vorgespannt ist. In seiner zweiten Stellung sperrt das zweite 2/2-Wegeventil 40. Die Verstellung des 2/2-Wegeventil 40 erfolgt über eine hydraulische Betätigung 44, die von der Umschalteinrichtung betätigt wird. Stromabwärts von dem zweiten 2/2-Wegeventil 40 ist ein Druckminderventil 46 vorgesehen, an dessen Ausgang der Haltedruck p_{H} anliegt. Da der Haltedruck p_{H} größer als der Bremsdruck p_{B} ist, sperrt das Rückschlagventil 32 und der Haltedruck liegt an dem Bremszylinder 34 an.

Bei Verwendung eines 3-Wegedruckminderventils verhindert das Rückschlagventil 32 die Druckbegrenzung. Auch zusätzliche Rückschlagventile können vorzusehen sein, um bei einem Ausfall einen ausreichenden Druck in der Rotorbremse aufrechtzuerhalten und Leckagen zu vermeiden.

Die Zuleitung zum Druckzylinder ist zusätzlich mit einem 2/2-Wegeventil 48 verbunden. Das 2/2-Wegeventil 48 ist in seiner stromlosen Stellung gesperrt und kann durch seine elektromagnetische Betätigung 52 in seine offene Stellung gebracht werden. In der offenen Stellung wird die Zuleitung zu dem Bremszylinder mit dem Tank 54 verbunden, um den Bremszylinder zu entlasten. Der Tank 54 kann Bestandteil des Drucksystems 18 sein.

Ein Umschalten zwischen dem Bremsdruck p_{B} und dem Haltedruck p_{H} erfolgt durch die hydraulische Betätigung 44 an dem zweiten 2/2-Wegeventil 40. Zur Betätigung ist ein Speicher 58 vorgesehen, der über eine Druckleitung 60 auf Systemdruck gebracht wird. In der dargestellten stromlosen Stellung des 2/2-Wegeventils 62 ist der Speicher 58 mit dem Tank 54 verbunden. Dabei ist in die Druckleitung 60 ein Stromregelventil 64 geschaltet. Das Stromregelventil 64 regelt den Abfluß der Hydraulikflüssigkeit aus dem Speicher 58 in den Tank 54. Während des Abfließens der Hydraulikflüssigkeit aus dem Speicher 58 fällt der Druck in der Druckleitung 60 und damit an der Betätigung 44 ab. Ist ein vorbestimmter Druckwert unterschritten, wird das zweite 2/2-Wegeventil 40 in seine offene Position gebracht und der Haltedruck p_{H} liegt an dem Bremszylinder 34 an.

Um den Speicher 58 beim Öffnen der Bremse wieder auf Systemdruck zu bringen, wird das 3/2-Wegeventil 62 in seine zweite Stellung gebracht, in der der Speicher 58 mit dem Drucksystem 18 verbunden ist, um wieder Systemdruck zu erreichen.

In der in Fig. 2 dargestellten hydraulischen Umschalteinrichtung kann die Zeitverzögerung bis zum Zeitpunkt T auch über ein elektrisches Zeitglied realisiert werden. In diesem Fall wird das hydraulisch vorgesteuerte Ventil 40 durch ein elektrisch betätigtes 2/2-Wegeventil ersetzt. Um auch bei Verlust der Spannung die Zeitverzögerung zu gewährleisten, muß eine autarke elektrische Versorgung des Zeitglieds vorgesehen sein. Diese muß auch bei Fehlfunktion, beispielsweise durch ein vorhandenes Bus-System zuverlässig arbeiten. Zu diesem Zweck kann beispielsweise eine separate unterbrechungsfreie Stromversorgung eingesetzt werden. Auch ist der Einsatz eines Kondensators zur Speicherung elektrischer Energie für den Zeitraum der gewünschten Zeitverzögerung zwischen Brems- und Haltedruck möglich.

## Patentansprüche

1. Verfahren zur Steuerung einer hydraulisch betätigten Rotorbremse für einen Triebstrang einer Windenergieanlage, wobei die Rotorbremse als aktive Rotorbremse ausgebildet ist, die mit steigendem Hydraulikdruck ein zunehmendes Bremsmoment aufbringt, bei dem Verfahren wird
- in einer ersten Phase ein Bremszylinder (34) über ein erstes Druckminderventil (30) mit einem ersten Druck (p_{B}) beaufschlagt,
**dadurch gekennzeichnet, daß**
- in einer zweiten Phase der Bremszylinder (34) über ein zweites Druckminderventil (46) mit einem zweiten Druck (p_{H}) beaufschlagt wird und
- eine Umschalteinrichtung vorgesehen ist, die zwischen dem ersten Druck und dem zweiten Druck nach Stillstand des Triebstrangs umschaltet.

2. Verfahren nach Anspruch 1, **dadurch gekennzeichnet, daß** das Drucksystem ausfallsicher Hydraulikflüssigkeit zur Betätigung der Rotorbremse bereitstellt.

3. Verfahren nach Anspruch 1 oder 2, **dadurch gekennzeichnet, daß** der Druck (p_{B}) des ersten Druckminderventil (30) kleiner ist als der Druck (p_{H}) des zweiten Druckminderventils (46).

4. Verfahren nach einem der Ansprüche 1 bis 3, **dadurch gekennzeichnet, daß** der Druck (p_{H}) des zweiten Druckminderventils mindestens ein vorbestimmtes Haltemoment an dem Bremszylinder (34) einstellt.

5. Verfahren nach Anspruch 4, **dadurch gekennzeichnet, daß** das vorbestimmte Haltemoment sich bei Umgebungstemperatur für die Rotorbremse einstellt.

6. Verfahren nach einem der Ansprüche 1 bis 5, **dadurch gekennzeichnet, daß** stromaufwärts von jedem der Druckminderventile ein 2/2-Wegeventil vorgeschaltet ist, das in eine offene Stellung federvorgespannt ist.

7. Verfahren nach einem der Ansprüche 1 bis 6, **dadurch gekennzeichnet, daß** die Umschalteinrichtung nach einer vorbestimmten Zeitdauer (T) das Umschaltventil (40) umschaltet.

8. Verfahren nach Anspruch 7, **dadurch gekennzeichnet, daß** die Umschalteinrichtung hydraulisch oder elektrisch betätigt wird.

9. Windenergieanlage mit einer hydraulisch betätigten Rotorbremse für den Triebstrang, die als aktive Rotorbremse ausgebildet ist, die mit steigendem Hydraulikdruck ein zunehmendes Bremsmoment aufbringt, **gekennzeichnet durch**
- eine erste und eine zweite Bremseinheit, die jeweils ein Druckminderventil (30, 46) aufweisen, über das ein Bremszylinder (34) mit jeweils einem Druck (p_{B}, p_{H}) beaufschlagt ist, und
- eine Umschalteinrichtung, die zwischen dem Druck (p_{B}) der ersten Bremseinheit und dem Druck (p_{H}) der zweiten Bremseinheit nach Stillstand des Triebstrangs umschaltet.

10. Windenergieanlage nach Anspruch 9, **dadurch gekennzeichnet, daß** ein ausfallsicheres Drucksystem (18) vorgesehen ist, das Hydraulikflüssigkeit zur Betätigung der Rotorbremse bereitstellt.

11. Windenergieanlage nach Anspruch 9 oder 10, **dadurch gekennzeichnet, daß** der Druck (p_{B}) der ersten Bremseinheit kleiner als der Druck (p_{H}) der zweiten Bremseinheit ist.

12. Windenergieanlage nach Anspruch 11, **dadurch gekennzeichnet, daß** das Druckminderventil (30) der ersten Bremseinheit einen anliegenden Systemdruck (p_{S}) stärker reduziert als ein Druckminderventil (46) der zweiten Bremseinheit.

13. Windenergieanlage nach Anspruch 12, **dadurch gekennzeichnet, daß** das Druckminderventil (46) der zweiten Bremseinheit ausgelegt ist, um ein Bremsmoment mit dem Bremszylinder zu erzeugen, das mindestens einem vorbestimmten Haltemoment entspricht.

14. Windenergieanlage nach Anspruch 13, **dadurch gekennzeichnet, daß** das Bremsmoment der zweiten Bremseinheit bei Umgebungstemperatur der Rotorbremse mindestens dem vorbestimmten Haltemoment entspricht.

15. Windenergieanlage nach einem der Ansprüche 9 bis 14, **dadurch gekennzeichnet, daß** jedem Druckminderventil ein 2/2-Wegeventil vorgeschaltet ist, das in eine für die Druckleitung durchgehende Position vorgespannt ist.

16. Windenergieanlage nach Anspruch 15, **dadurch gekennzeichnet, daß** die Umschalteinrichtung hydraulisch oder elektrisch das 2/2-Wegeventil der zweiten Bremseinheit betätigt.

17. Windenergieanlage nach einem der Ansprüche 9 bis 16, **dadurch gekennzeichnet, daß** ein 2/2-Wegeventil eine Druckleitung (50) zum Bremszylinder (34) mit einem Tank (54) verbindet, wobei das 2/2-Wegeventil (48) in seine sperrende Position vorgespannt ist.

## Claims

1. Method for controlling a hydraulically actuated rotor brake for a drive train of a wind energy plant, wherein the rotor brake is realized as an active rotor brake, which applies an increasing braking moment when the hydraulic pressure increases, in the method
• in a first phase, a brake cylinder (34) is pressurized with a first pressure (p_{B}) via a first pressure reducing valve (30),
**characterized in that**
• in a second phase, the brake cylinder (34) is pressurized with a second pressure (p_{H}) via a second pressure reducing valve (46), and
• a switchover device is provided, which switches over from the first pressure to the second pressure after standstill of the drive train.

2. Method according to claim 1, **characterized in that** the pressure system provides hydraulic fluid for actuating the rotor brake in a fail-safe manner.

3. Method according to claim 1 or 2, **characterized in that** the pressure (p_{B}) of the first pressure reducing valve (30) is smaller than the pressure (p_{H}) of the second pressure reducing valve (46).

4. Method according to any one of claims 1 to 3, **characterized in that** the pressure (p_{H}) of the second pressure reducing valve sets at least one predetermined holding moment at the brake cylinder (34).

5. Method according to claim 4, **characterized in that** the predetermined holding moment appears for the rotor brake at environmental temperature.

6. Method according to any one of claims 1 to 5, **characterized in that** a 2/2-port valve is connected upstream of each of the pressure reducing valves, which is spring-pretensioned to an open position.

7. Method according to any one of claims 1 to 6, **characterized in that** the switchover device switches over the switchover valve (40) after a predetermined period of time (T).

8. Method according to claim 7, **characterized in that** the switchover device is actuated hydraulically or electrically.

9. Wind energy plant with a hydraulically actuated rotor brake for the drive train, which is realized as an active rotor brake which applies an increasing braking moment when the hydraulic pressure increases, **characterized by**
• a first and a second brake unit, each one having a pressure reducing valve (30, 46), via which a brake cylinder (34) is pressurized with a pressure (p_{B}, p_{H}) respectively, and
• a switchover device, which switches over from the pressure (p_{B}) of the first brake unit and the pressure (p_{H}) of the second brake unit after standstill of the drive train.

10. Wind energy plant according to claim 9, **characterized in that** a fail-safe pressure system (18) is provided which provides hydraulic fluid for actuating the rotor brake.

11. Wind energy plant according to claim 9 or 10, **characterized in that** the pressure (p_{B}) of the first brake unit is smaller than the pressure (p_{H}) of the second brake unit.

12. Wind energy plant according to claim 11, **characterized in that** the pressure reducing valve (30) of the first brake unit reduces an existing system pressure (p_{S}) more strongly than a pressure reducing valve (46) of the second brake unit.

13. Wind energy plant according to claim 12, **characterized in that** the pressure reducing valve (46) of the second brake unit is dimensioned to generate a braking moment with the brake cylinder which is at least equivalent to a predetermined holding moment.

14. Wind energy plant according to claim 13, **characterized in that** at the environmental temperature of the rotor brake, the braking moment of the second brake unit is at least equivalent to the predetermined holding moment.

15. Wind energy plant according to any one of claim 9 to 14, **characterized in that** a 2/2-port valve is connected before each pressure reducing valve, which is pretensioned into a pass-through position for the pressure line.

16. Wind energy plant according to claim 15, **characterized in that** the switchover device actuates the 2/2-port valve of the second brake unit hydraulically or electrically.

17. Wind energy plant according to any one of claim 9 to 16, **characterized in that** a 2/2-port valve connects a pressure line (50) to the brake cylinder (34) with a tank (54), wherein the 2/2-port valve (48) is pretensioned into its locking position.

## Revendications

1. Procédé de commande d'un frein de rotor actionné hydrauliquement pour une transmission d'une éolienne, le frein de rotor étant constitué en tant que frein de rotor actif qui applique un moment de freinage qui augmente avec l'accroissement de la pression hydraulique, procédé dans lequel,
- dans une première phase, un cylindre de frein (34) est alimenté par une première pression (p_{B}) par le biais d'un premier détendeur de pression (30),
**caractérisé en ce que**,
- dans une deuxième phase, le cylindre de frein (34) est alimenté par une deuxième pression (p_{H}) par le biais d'un deuxième détendeur de pression (46) et
- **en ce qu'**il est prévu un équipement de commutation qui assure la commutation entre la première pression et la deuxième pression après l'arrêt de la transmission.

2. Procédé selon la revendication 1, **caractérisé en ce que** le système de pression fournit, avec une sûreté intégrée, du liquide hydraulique pour l'actionnement du frein de rotor.

3. Procédé selon la revendication 1 ou 2, **caractérisé en ce que** la pression (p_{B}) du premier détendeur de pression (30) est inférieure à la pression (p_{H}) du deuxième détendeur de pression (46).

4. Procédé selon une des revendications 1 à 3, **caractérisé en ce que** la pression (p_{H}) du deuxième détendeur de pression règle au moins un moment de retenue prédéfini sur le cylindre de frein (34).

5. Procédé selon la revendication 4, **caractérisé en ce que** le moment de retenue prédéfini se règle à la température ambiante pour le frein de rotor.

6. Procédé selon une des revendications 1 à 5, **caractérisé en ce que**, en amont de chacun des détendeurs de pression, il est installé un distributeur à 2/2 voies qui est prétendu par ressort dans une position ouverte.

7. Procédé selon une des revendications 1 à 6, **caractérisé en ce que** l'équipement de commutation commute la vanne de commutation (40) après une durée (T) prédéfinie.

8. Procédé selon la revendication 7, **caractérisé en ce que** l'équipement de commutation est actionné hydrauliquement ou électriquement.

9. Eolienne avec un frein de rotor actionné hydrauliquement pour la transmission, qui est constitué en tant que frein de rotor actif qui applique un moment de freinage croissant quand la pression hydraulique augmente, **caractérisée par**
- une première et une deuxième unité de freinage qui présentent respectivement un détendeur de pression (30, 46) par le biais duquel un cylindre de frein (34) est alimenté respectivement par une pression (p_{B}, p_{H}), et
- un équipement de commutation qui assure la commutation entre la pression (p_{B}) de la première unité de freinage et la pression (p_{H}) de la deuxième unité de freinage après l'arrêt de la transmission.

10. Eolienne selon la revendication 9, **caractérisée en ce qu'**il est prévu un système de pression (18) à sûreté intégrée qui fournit du liquide hydraulique pour l'actionnement du frein de rotor.

11. Eolienne selon la revendication 9 ou 10, **caractérisée en ce que** la pression (p_{B}) de la première unité de freinage est inférieure à la pression (p_{H}) de la deuxième unité de freinage.

12. Eolienne selon la revendication 11, **caractérisée en ce que** le détendeur de pression (30) de la première unité de freinage réduit plus fortement une pression de système (pₛ) présente qu'un détendeur de pression (46) de la deuxième unité de freinage.

13. Eolienne selon la revendication 12, **caractérisée en ce que** le détendeur de pression (46) de la deuxième unité de freinage est conçu pour produire avec le cylindre de frein un moment de freinage qui correspond au moins à un moment de retenue prédéfini.

14. Eolienne selon la revendication 13, **caractérisée en ce que** le moment de freinage de la deuxième unité de freinage à la température ambiante du frein de rotor correspond au moins au moment de retenue prédéfini.

15. Eolienne selon une des revendications 9 à 14, **caractérisée en ce que**, en amont de chaque détendeur de pression, il est installé un distributeur à 2/2 voies qui est prétendu dans une position continue pour la conduite de pression.

16. Eolienne selon la revendication 15, **caractérisée en ce que** l'équipement de commutation actionne hydrauliquement ou électriquement le distributeur à 2/2 voies de la deuxième unité de freinage.

17. Eolienne selon une des revendications 9 à 16, **caractérisée en ce qu'**un distributeur à 2/2 voies raccorde une conduite de pression (50) conduisant au cylindre de frein (34) à un réservoir (54), le distributeur à 2/2 voies (48) étant prétendu dans sa position bloquante.
